## Europäisches Patentamt

## European Patent Office

## Office européen des brevets

(11) Publication number: **0 119 334**
**B1**

# EUROPEAN PATENT SPECIFICATION

(45) Date of publication of patent specification: **20.05.87**

(21) Application number: **83301448.3**

(22) Date of filing: **16.03.83**

(51) Int. Cl.⁴: **H 04 N 1/036**, H 04 N 1/12, G 02 B 7/00

(54) **Unitary, modular demountable optical system for laser diode printing copying apparatus.**

(43) Date of publication of application:
**26.09.84 Bulletin 84/39**

(45) Publication of the grant of the patent:
**20.05.87 Bulletin 87/21**

(84) Designated Contracting States:
**BE DE FR GB NL SE**

(56) References cited:
**DE-A-2 922 452**
**US-A-4 123 135**
**US-A-4 125 864**
**US-A-4 170 404**

**IBM TECHNICAL DISCLOSURE BULLETIN, vol. 22, no. 7, December 1979, pages 2655-2656, New York, USA D.E. GRANT: "Pre-aligned laser field-replaceable subassembly"**

(73) Proprietor: **BURROUGHS CORPORATION (a Delaware corporation)**
**Burroughs Place**
**Detroit Michigan 48232 (US)**

(72) Inventor: **Fedder, Richard C.**
**106 Eastern Fork**
**Longwood Fla. 32750 (US)**
Inventor: **Schafner, George Carl**
**732 W. Lancaster Bldg. 1 Apt. 64.**
**Orlando Fla. 32809 (US)**
Inventor: **Robson, Thomas**
**1120 Hall Lane**
**Orlando Fla. 32809 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Courier Press, Leamington Spa, England.

## Description

Background of the Invention

### 1. *Field of the Invention*

This invention relates to photo-optical scanning apparatus utilizing a laser diode light generating device and a polygonal mirror assembly in conjunction with suitable light beam collimating and focusing apparatus. More specifically, the invention relates to a system for precisely shaping the laser generating light beam into an efficient spot scanning size for electrophotographic printing and/or copying.

### 2. *Description of the Prior Art*

Many problems are associated with scanning systems wherein a modulated or unmodulated light beam is caused to scan by means of a rotatable polygonal mirror. For example, the position of each scanning line becomes difficult to control. This problem is a result of the angular relationship between adjacent facets of the polygon as well as between the facet planes and the rotational axis of the polygon.

Another problem is associated with the location of the laser light generating apparatus and its angular relationship to the operably associated hardware. A further problem is that as the polygon mirror assembly is rotated at a constant rotational rate the speed of the generated spot will be constant along an arc but will not be constant with respect to a straight line scan. In fact, the laser beam or spot speeds up at the periphery of the scan line which in turn has the effect of changing the dimension of the output data being developed. These and other similarly associated problems have caused many of the prior art devices to be less than commercially satisfactory.

### 2. *Description of the Prior Art*

A number of techniques and apparatus have been suggested for use in laser printing copying. Each has certain characteristics which recommend it for a specific application. Obviously, the goal is to provide a type of printing/copying device which accommodates a variety of purposes and performs these functions effectively and efficiently.

The following patents are considered to be pertinent to the present invention which is considered to be an improvement thereover, as well as an improvement over the earlier filed application USSN 276,260, as will be described later on herein.

Fleischer, 3,750,189 shows and describes a helium-neon laser scanner whose light output is coupled through a lens system to a rotating polygon mirror from which the light is reflected through a lens system to a rotating drum. In the Fleischer structure a cylindrical lens is employed to focus the collimated beam of light to a line on a flat facet of the polygon mirror while a second cylindrical or toric lens after the polygon is used to recollimate the light reflected from the polygon. A spherical lens then focuses the recollimated light beam to a small spot on the scan line of the photocopy drum.

For appreciable scan angles it is necessary to use a toroid in order to maintain the spot size over the scan line. However, toroidal lenses are relatively difficult to manufacture and are therefore usually not economically or commercially feasible due to their high cost.

Grafton, 3,946,150 employs a cylindrical lens near the photoreceptor. This proximity requires the use of a long cylindrical lens. Also, since this lens is located close to the developer unit it tends to become coated with toner which degrades the light and resulting photocopy.

Rabedeau, 4,123,135 is stated to be an improvement over the apparatus described in Fleischer, 3,750,189. Rabedeau notes that the beam entering the spherical lens need not be collimated. Rabedeau makes use of this by employing a negative cylindrical lens with power in the scan direction following the polygon to produce the same beam divergence in both azimuths for the beam that enters the spherical focusing lenses. The method and structure permits the use of less expensive cylindrical lenses but also tends to flatten the field. However, it remains a very difficult problem to flatten the field over wide angles when relatively high resolution is required.

Specifically in one embodiment US—A—4 123 135 discloses the use of an optical system composed of a negative plano-concave cylindrical lens element, a positive spherical lens element and a positive cylindrical lens element. Another embodiment disclosed in the said US Specification uses an additional spherical lens element in place of the positive cylindrical lens element.

In accordance with the present invention the optical system used between the mirror assembly and the drum consists of a cylindrical meniscus lens, which serves to focus the beam in the scanning direction, and a pair of cylindrical-spherical lenses which provide cross-scan focusing. In addition, in accordance with the present invention, an angularly adjustable mirror is located between the mirror assembly and the said optical system.

The cylindrical-spherical lenses used in accordance with the present invention provide a function similar to a pair of toric lenses, but at a more reasonable cost.

One embodiment of the invention will now be described with reference to the accompanying diagrammatic drawings, in which:

Figure 1 is a schematic representation, not to scale, of the light beam path for the apparatus incorporating the modified invention;

Figure 2 is an unfolded schematic representation of the light beam formation as it passes through different lens assemblies in the apparatus of the invention;

Figure 3 is a perspective view, not to scale, of the apparatus of the invention;

Figure 4 is a partial top plan view of apparatus incorporating the invention;

Figure 5 is a plan of the organization of the views of Figure 5A and 5B; and

Figures 5A and 5B are side elevational views of the modular structure of the invention.

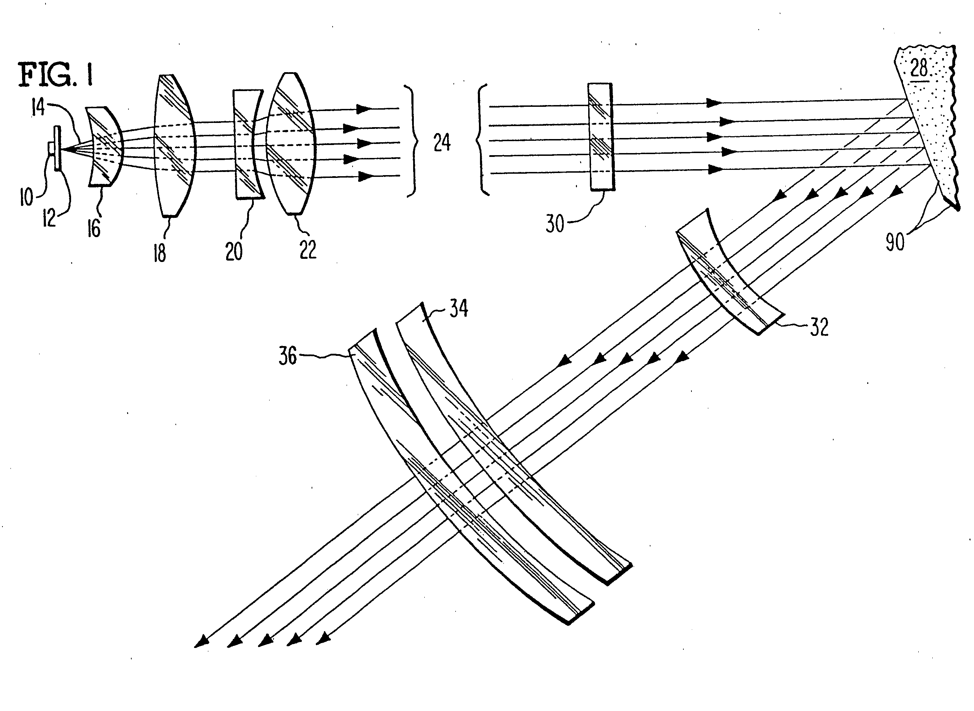

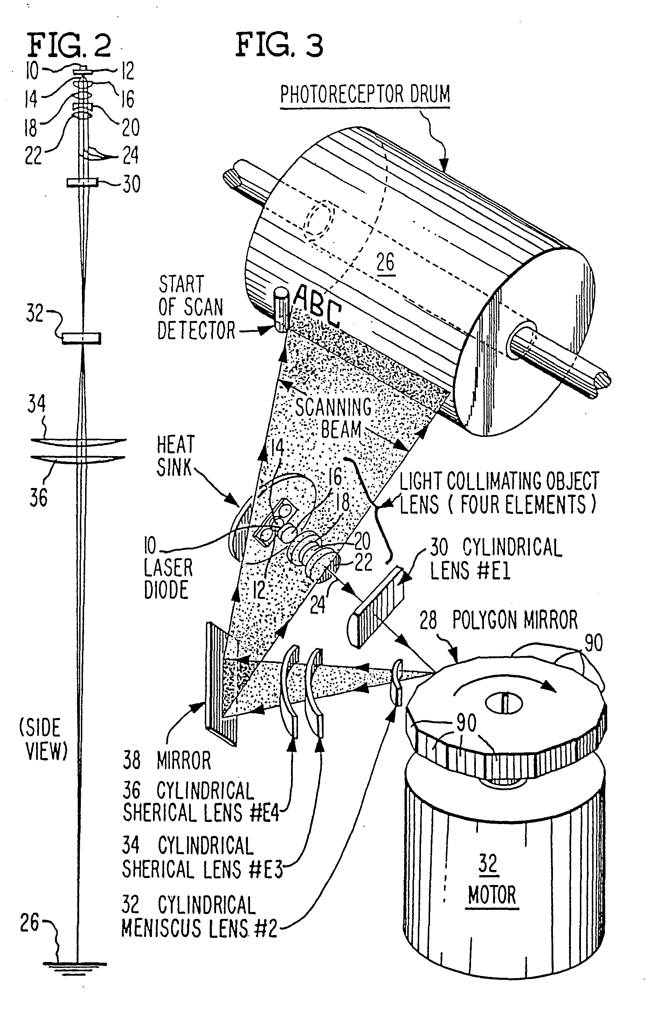

Briefly, as seen in the highly schematic, views of Figures 1 and 2 a laser diode 10 mounted behind a sapphire window 12 is pulsed by a driver circuit (not shown) which is fed from the imaging electronics operably coupled to the present apparatus and also not shown herein. The logic is set up such that the laser diode is "off" when intelligible characters or other information is to be printed. Solid state laser diodes of the double heterostructure variety produce a diverging beam of light when pulsed by the driver circuit and therefore, requires collimated optics.

Light rays 14 emitted from the laser diode 10 are first collected and collimated by a four element objective lens assembly the elements of which are designated 16, 18, 20 and 22 respectively, provided with spherical elements. The first two lenses act as converging or positive elements and collect the light with minimum aberration while the third objective element 20 is a diverging lens that compensates the residual aberration from the other three elements. Collimated light 24 emerges from fourth element 22 when the facet of the laser diode chip 10 is located at the focal point of the objective lens assembly. The collimated beam 24 now has an elliptical shape corresponding to the differing divergence angles of the beam from the laser diode 10 in planes parallel and perpendicular to the junction of the diode. It is noted that a three element objective lens could be employed in place of the present four element lens assembly with suitable choice of glasses.

The collimated laser beam 24 is then scanned and focused onto a rotatable photoreceptor drum 26, Figures 2 and 3 by means of a polygon scanner assembly 28 and a set of four lens elements designated hereinafter. An additional function of the four lens set is to correct for the pyramidal angle variation or the variation in the angle between the facets of the polygon and the axis of rotation. Without this correction the laser scan lines on the drum 26 would not overlap uniformly from one scan line to the next. Since the light from the laser diode 10 discharges the surface potential or white space between the latent images of characters and or intelligible information, the variable overlap of scan lines would cause a variation in the discharge of the potential therefore and cause lines to appear in the "white" space of the toned image.

The above variation in scan line overlap is reduced in the following manner. First, the collimated beam 24 is focused in the cross scan direction by a first cylindrical lens 30 to form a line image on the facet of the polygon 28. Lenses that follow the polygon 28 focus the beam to a small spot on the photoreceptor 26.

If the line of focus is strictly in the plane of the facet, then rotation of the facet about that focus line would produce no movement of the subsequently focused spot on the photoreceptor 26. In practice, however, the correction for pyramidal angle error is not absolute and the focused spot will move slightly in the cross scan direction as a line cannot be perfectly focused on the facet for all positions. Following the polygon 28 a cylindrical meniscus lens 32 serves to focus the beam to a small dimension in the scanning or horizontal direction. By appropriately curving or bending this lens the field of the horizontal focus can be flattened and the aberration can be minimized. This lens interacts very weakly with the vertical or cross scan focus since the power is negligible in that direction. The cross scan or vertical focusing is achieved by a pair of cylindrical-spherical lenses 34 and 36 with the corresponding centers of the cylindrical and spherical surfaces located near the facet and with power mainly in the vertical or cross scan direction. Thus, aberrations in the vertical direction are reduced and the field is flattened in the scan direction first by using a pair of lenses and second by bending or curving the lenses slightly in the horizontal direction. It can be shown from thin lens theory that the index of refraction of the glass in the pair should be greater than 1.62 to have a finite separation between the pair. Flint glasses such as SF6 have a high index of refraction and allow comfortable space between the pair. One novel aspect of this optical combination is that the pair approximates a pair of toroidal lenses which have been used in the prior art but which are expensive to manufacture. Another novel aspect is that the horizontal and vertical spot size can be focused independently. Finally, a mirror 38, Figure 3 bends the light at a suitable angle to cause the light to impinge upon the surface of drum 26.

Referring to the detailed drawings Figure 10 and 11 and 11 the laser diode 10 is mounted on a copper block 42, as seen from above. The copper block in turn is mounted on a thermo-electric cooler 44 that cools the laser diode 10 to approximately 19 degrees centigrade. The diode 10 is positioned accurately by means of a setup fixture (not shown) relative to a microscope objective 46 so that it is on the center line of the microscope objective optics. The position of the laser diode 10 is thus preset relative to the optical axis before installing it in the laser diode assembly. The diode assembly 10 including cooler 44 is positioned on locating pins (not shown) that locate it so as to avoid any adjustments while in place on the copy machine. From the laser diode 10 the light diverges, more in the horizontal direction than in the vertical direction. The horizontal direction is characterized herein as "the scan direction" and the vertical direction is characterized herein as the "cross scan direction". The light in the scan direction diverges by 30 degrees to the half intensity points on the beam and by 10 degrees to the half intensity points on the beam in the cross scan direction. After the light passes through the microscope objective 46, the beam is collimated assuming that the microscope objective is positioned properly. This divergence of the beam produces a different beam size in the scan direction as opposed to the cross scan direction. The beam produces a different beam size in the scan direction as opposed to the cross scan direction. The beam will have a larger dimension in the cross scan direction than in the scan direction with about a three to one ratio.

The collimated beam is next passed through a cylindrical lens 48. The first cylindrical lens (similar to lens 30) has power in the cross scan direction and will cause the beam to focus down to a line image on the rotatable polygon 50. It does not have any power in the scan direction. The beam is still collimated in the scan or horizontal direction. The light is then focused by a horizontal meniscus lens 52 (similar to lens 32) which is the first lens following the polygon 50. Lens 52 has power in the scan direction only so it focuses the wide horizontal dimension of the beam down to a narrow spot on the photoreceptor drum 54 after passing through the third and fourth lenses 58 and 60, respectively (identical to lenses 34 and 36), which individually have no power in the horizontal direction and, after reflecting off of folding mirror 56 (identical to mirror 38) is in focus both horizontally and vertically on the drum 54. For the cross scan direction, the beam is focused by the third and fourth lenses 58 and 60 which have a cylindrical surface on the first surface 62 and 64, respectively, and a spherical surface 66 and 68 on the second surface, respectively. This pair of lenses (following each other in succession) have power in the cross scan direction and essentially focus the line which is imaged on the polygon 50 to a point in the cross scan direction. The focusing in the other direction is performed by the horizontal meniscus lens 52 which is, as before mentioned, the first lens following the polygon.

The lenses are curved so as to flatten the field. The horizontal meniscus lens 52 is generally curved concave toward the facet of the polygon 50, almost producing a spherical surface with its center at the facet. The curving or bending of the lenses permits the field of focus at the drum 54 to be flat and also improves the scan linearity at the drum.

Each one of the four lenses 43, 52, 62 and 64 is demountably removable relative to each respective frame of reference. This permits cleaning, polishing, replacement, etc. Fixed locating pins 60 are arranged to provide fixed reference for each lens and enables these individual elements to be removed at will and replaced without fear of mislocation.

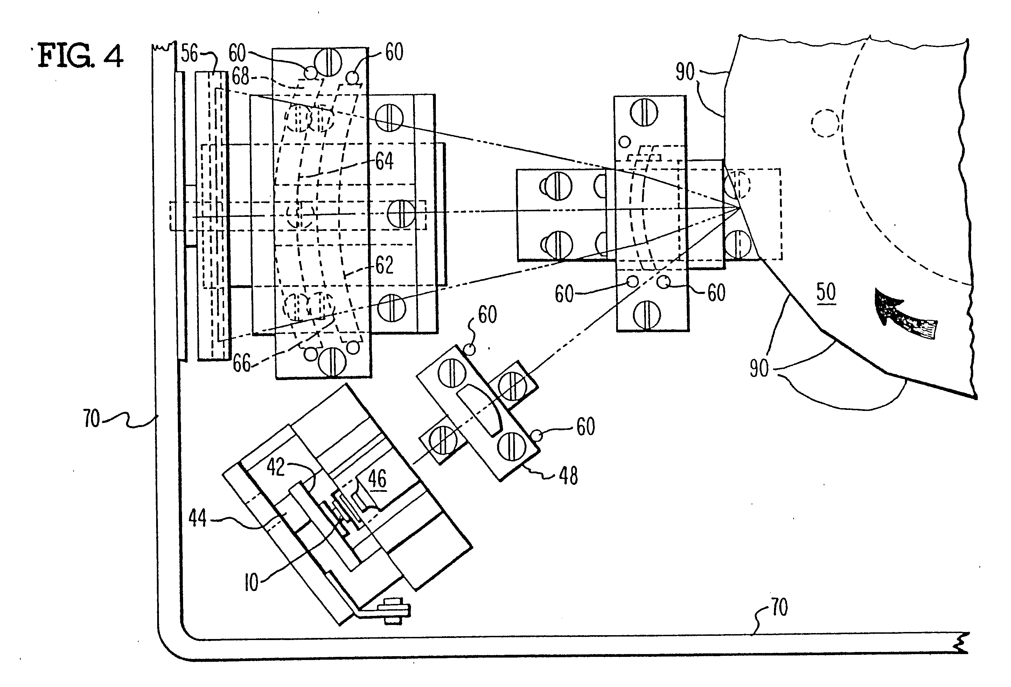

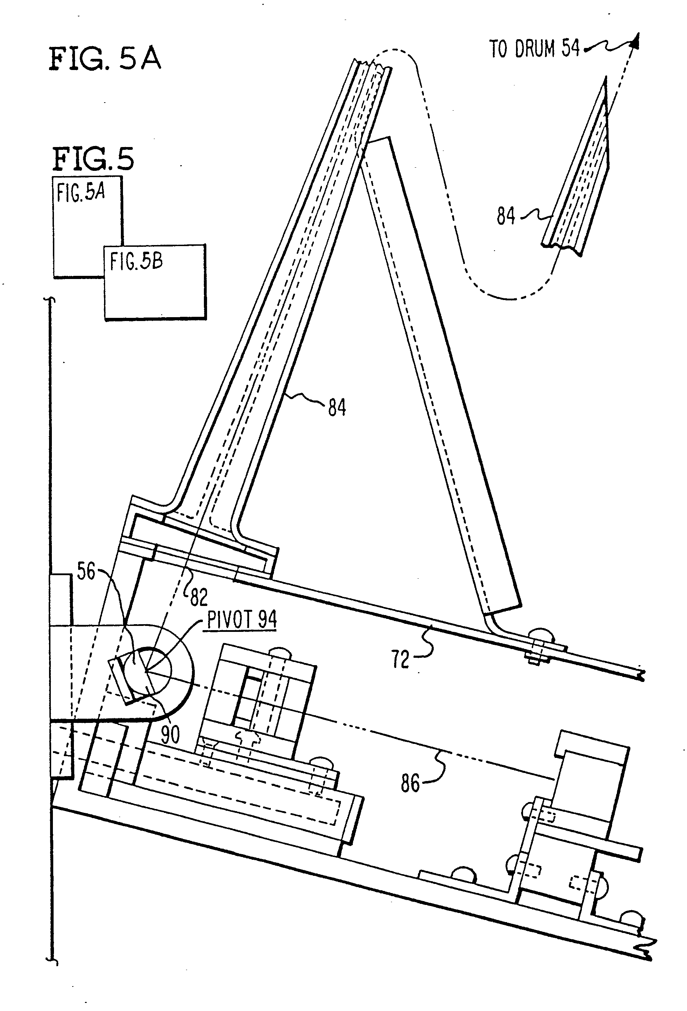

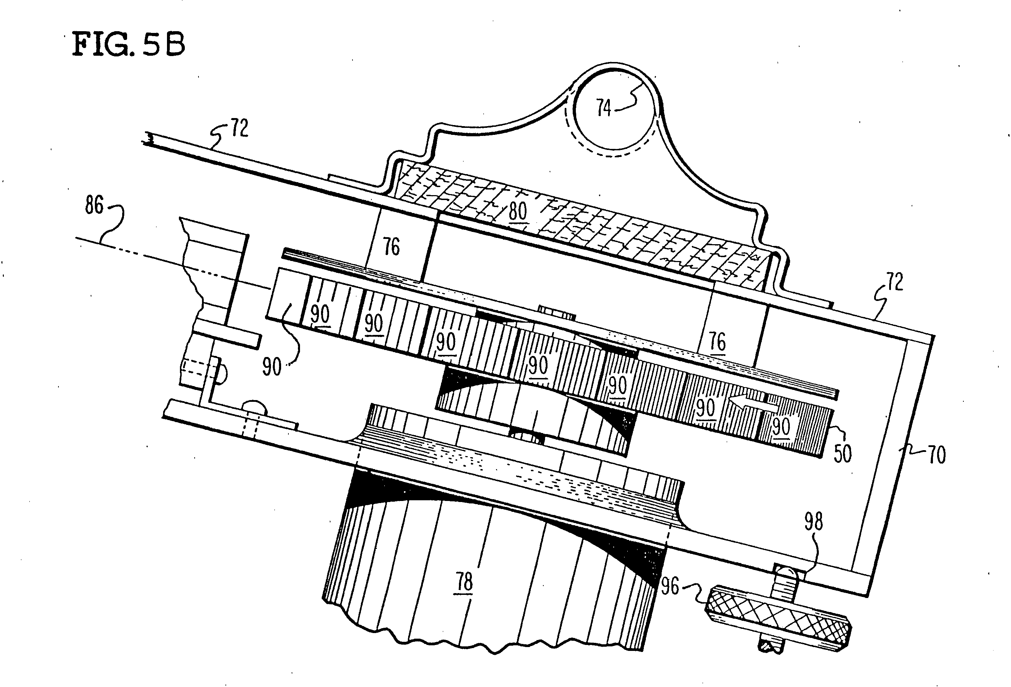

As can be seen in Figures 4, 5A and 5B the complete optical assembly is mounted within a rectangular casting 70 which includes a cover 72 that encloses the top of the casting. The top 72 itself is provided with an air inlet 74 and a flange 76 that comes down close over the polygon 50. Rotation of the polygon 50 by motor 78 creates a vacuum which causes air to be pulled in through a filter 80 that is centered over the top of the polygon 50.

The filtered air is forced out inside of the optical casting 70 to create a positive air pressure therein. The air flow is through the casting 70, through an elongated opening 82 (the beam scanning aperture) up through a wedge shaped shroud 84 that is mounted to the top cover 72. The air pressure is maintained such that the positive air flow prevents toner from getting into casting 70. The shroud 84 is angled in such a way as to overhang the assembly, thus the optics is protected from dust, dirt or falling objects from falling directly into the optics.

As can be seen in Figures 3 and 4 the beam is folded off of folding mirror 56 Figure 4 and directed up through the shroud 84 to the photoreceptor drum 54. Beam scanning begins with each facet rotation starting from the left side of the drum 26 Figure 3. The beam crosses a start of scan detector 88 that is mounted up near the photoreceptor 54. This member provides the timing for the printing that is to be performed. The start of scan pulse provided by detector 88 is used to initiate the print cycle on a scan line and so many counts after that pulse, the electronics (not shown) initiates the unloading of the dot line buffers (not shown) that provides the information for each character in bit form.

The polygon 50 which is six inches in diameter is provided with 18 facets 90. Obviously the smaller the number of facets the higher the speed must be. The size of the present polygon was chosen for a thirty page per minute copier so as to keep the RPM of the motor down to a speed around 4900 RPM. At this speed the polygon is expected to last for the life of the machine. The size of the facets 90 were selected to provide uniform illumination across the full scan width. The beam as it falls on facet 90 is about two tenths of an inch in diameter between half intensity points. This is the so-called underfilled case, i.e. a facet 90 is underfilled. The intensity of the scanning beam or scanning spot must remain constant across the full scan width. If part of the beam is cut off toward the edge of the facets, this results in a decrease of intensity. The width of the facets is designed so as to keep the intensity of the beam constant across a nine and a half inch scan within five percent variation. The nine and a half inch dimension is slightly wider than the width of the drum. The start of the scan detector 88 is included within this dimension.

The complete optical assembly of the present invention is set into the printer/copier machine on a pair of pivots 92. One on each opposite side of casting 70 to the left in Figure 5A. The center of these pivot points passes through the center 94 of folding mirror 56. The whole assembly is horizontally angularly adjusted by means of screw 96 and slot 98 on the underside of casting 70 located at the opposite end of the casting removed from the pivot points. After the box like assembly 70 is placed into the machine, the adjusting screw 96 tilts the whole assembly until the beam falls onto the start to scan detector 88. By having the pivot points pass through the center of folding mirror 56 the plane of focus remains substantially constant or unchanged on the photoreceptor as the assembly is tilted to make the beam fall on the start of scan detector.

There has thus been described a new, novel and heretofore unobvious photo-optical laser diode printing/copying apparatus which provides a very high speed, very efficient and very cost effective combination of operational apparatus to provide clean, clear, crisp copies without the attendant problems associated with much of the prior art devices.

## Claims

1. An optical scanning system using laser light generation comprising a photoreceptor drum (40) rotatable about an axis; a solid-state laser diode (10) producing divergent rays (14); collimating means (16, 18, 20, 22) for collecting said divergent rays and forming them into a beam (24), one dimension of which is expanded and the other dimension of which is reduced so that the beam (24) has an elliptical shape; means (30) for focusing the beam (24) from said collimating means as a line image on a facet of a polygonal multi-facet mirror assembly (28) which rotates to cause said fixed light beam to scan the drum (26) in a direction parallel to said axis; and multiple optical means in the path between said mirror assembly (28) and said drum (26); characterised in that said multiple optical means comprises a cylindrical meniscus lens (32) which serves to focus the beam in the scanning direction and a pair of cylindrical-spherical lenses (34, 36) which provide cross-scan focusing, and in that an angularly adjustable mirror (38) is located between said mirror assembly (28) and said multiple optical means (32, 34, 36).

2. A scanning system according to Claim 1, characterised in that said cylindrical meniscus lens (32) is bent or bowed, effectively flattening the focus in the scanning direction and thus minimising any aberration.

3. A scanning system according to Claim 1 or Claim 2, characterised in that said cylindrical-spherical lenses (34, 36) have the centres of their spherical surfaces located adjacent to the facet of the mirror assembly (28) and have their power mainly in the cross-scan direction.

4. A scanning system according to Claim 3, characterised in that said cylindrical-spherical lenses (34, 36) are bent or curved in the scanning direction, effectively reducing aberration in the cross-scan direction while the field is flattened in the scan direction.

5. A scanning system according to Claim 4, characterised in that said cylindrical-spherical lenses (34, 36) are effective to focus the line which is imaged on the facet of the mirror assembly to a point in the cross-scan direction.

6. A scanning system according to any of the preceding Claims, characterised in that it is adjustably mounted on a rigid base assembly for linear movement along fixed guide rails.

7. A scanning system according to Claim 6, characterised in that said solid-state laser diode (10) and said collimating means (16, 18, 20, 22) are gimbal mounted and disposed in a rigid support mounted on said rigid assembly and including a conductive dissipating element (44) for removing heat from said laser diode.

8. A scanning system according to Claim 7, characterised in that said collimating means (16, 18, 20, 22) is slidably positioned relative to said laser diode (10), and in that vernier adjusting means are provided to tilt said laser diode and said collimating means about a fixed axis.

9. A scanning system according to Claim 8, characterised in that said collimating means (16, 18, 20, 22) is a microscope objective which forms said rays (14) into a beam (24) of substantially elliptical cross section.

## Patentansprüche

1. Optisches Abtastsystem, das eine Laserlichterzeugung verwendet, mit einer um eine Achse drehbaren Fotoempfangstrommel (40), einer divergierende Strahlen (14) erzeugenden Halbleiter-Laserdiode (10); einer Kollimatoreinrichtung (16, 18, 20, 22), die die divergierenden Strahlen sammelt und sie zu einem Strahl (24) formt, dessen eine Abmessung vergrößert und dessen andere Abmessung verkleinert ist, so daß der Strahl (24) eine elliptische Form aufweist; einer Einrichtung (30) zum Fokussieren des von der Kollimatoreinrichtung abgegebenen Strahles (24) zu einem Zeilenbild auf einer Seitenfläche einer polygonalen Mehr-Seitenflächen-Spiegelanordnung (28), die rotiert, damit der feste Lichtstrahl die Trommel (26) in einer Richtung parallel zur Achse abtastet; und Mehrfachoptikeinrichtungen im Pfad zwischen der Spiegelanordnung (28) und der Trommel (26); dadurch gekennzeichnet, daß die Mehrfachoptikeinrichtungen eine zylindrische Meniskuslinse (32), die zum Fokussieren des Strahles in der Abtastrichtung dient, und zwei zylindrisch-sphärische Linsen (34, 36) zur Querabtastfokussierung enthält, und daß ein schwenkbarer Spiegel (38) zwischen der Spiegelanordnung (28) und den Mehrfachoptikeinrichtungen (32, 34, 36) angeordnet ist.

2. Abtastsystem nach Anspruch 1, dadurch gekennzeichnet, daß die zylindrische Meniskuslinse (32) gekrümmt oder gebogen ist und den Fokus in Abtastrichtung wirksam abflacht und somit jedwede Ablenkung minimiert.

3. Abtastsystem nach Anspruch 1 oder 2, dadurch gekennzeichnet, daß die Mitten der sphärischen Oberflächen der zylindrisch-sphärischen Linsen (34, 36) neben der Seitenfläche der Spiegelanordnung (28) angeordnet sind und ihre Brennstärke hauptsächlich in Querabtastrichtung haben.

4. Abtastsystem nach Anspruch 3, dadurch gekennzeichnet, daß die zylindrisch-sphärischen Linsen (34, 36) in Abtastrichtung gekrümmt oder gebogen sind und somit wirksam die Ablenkung in Querabtastrichtung reduzieren, während das Feld in Abtastrichtung abgeflacht wird.

5. Abtastsystem nach Anspruch 4, dadurch gekennzeichnet, daß die zylindrisch-sphärischen Linsen (34, 36) die Zeile, die auf der Seitenfläche der Spiegelanordnung abgebildet wird, zu einem Punkt in Querabtastrichtung fokussieren.

6. Abtastsystem nach einem der vorstehenden Ansprüche, dadurch gekennzeichnet, daß das System einstellbar auf einer festen Trägeranordnung zur linearen Bewegung entlang fester Führungsschienen befestigt ist.

7. Abtastsystem nach Anspruch 6, dadurch gekennzeichnet, daß die Halbleiter-Laserdiode (10) und die Kollimatoreinrichtung (16, 18, 20, 22) kardanisch aufgehängt und in einem festen Gestell angeordnet sind, das auf der festen Anordnung befestigt ist und ein leitfähiges Ableitelement (44) zum Wärmeentzug von der Laserdiode enthält.

8. Abtastsystem nach Anspruch 7, dadurch gekennzeichnet, daß die Kollimatoreinrichtung (16, 18, 20, 22) gleitend in Bezug auf die Laserdiode (10) angeordnet ist und daß eine Feineinstellvorrichtung vorgesehen ist, um die Laserdiode und die Kollimatoreinrichtung um eine feste Achse zu schwenken.

9. Abtastsystem nach Anspruch 8, dadurch gekennzeichnet, daß die Kollimatoreinrichtung (16, 18, 20, 22) aus einem Mikroskopobjektiv besteht, das die Strahlen (14) zu einem Strahl (24) mit im wesentlichen elliptischem Querschnitt formt.

## Revendications

1. Système de balayage optique utilisant un générateur de lumière à laser, comprenant un tambour photorécepteur (40) pouvant tourner autour d'un axe; une diode laser à l'état solide (10) produisant des rayons divergents (14); des moyens de collimation (16, 18, 20, 22) permettant de collecter les rayons divergents et de leur donner la forme d'un faisceau (24) dont une dimension est dilatée et dont l'autre dimension est réduite de façon que le faisceau (24) présente une forme elliptique; des moyens (30) permettant de focaliser le faisceau (24) à partir des moyens de collimation, sous la forme d'une image de ligne sur une facette d'un ensemble de miroir polygonal à facettes multiples (28) tournant de façon que le faisceau de lumière fixe balaye le tambour (26) dans une direction parallèle à l'axe; et des moyens optiques multiples placés sur le chemin optique entre l'ensemble de miroir (28) et le tambour (26); système caractérisé en ce que les moyens optiques multiples comprennent une lentille ménisque cylindrique (32) servant à focaliser le faisceau dans la direction de balayage, et une paire de lentilles cylindrique-sphérique (34, 36) permettant d'obtenir une focalisation de balayage croisé, et en ce qu'un miroir réglable angulairement (28A) est placé entre l'ensemble de miroir (28) et les moyens optiques multiples (32, 34, 36).

2. Système de balayage selon la revendication 1, caractérisé en ce que la lentille ménisque cylindrique (32) est courbée ou bombée de manière à aplatir effectivement le foyer dans la direction de balayage, de manière à minimiser ainsi toute aberration éventuelle.

3. Système de balayage selon l'une quelconque des revendications 1 et 2, caractérisé en ce que les centres des surfaces sphériques des lentilles cylindrique-sphérique (34, 36) sont placés au voisinage de la facette de l'ensemble de miroir (28), et en ce que la puissance de convergence de ces lentilles se manifeste essentiellement dans la direction de balayage croisé.

4. Système de balayage selon la revendication 3, caractérisé en ce que les lentilles cylindrique-sphérique (34, 36) sont courbées ou incurvées dans la direction de balayage, de manière à réduire efficacement l'aberration dans la direction de balayage croisé, tout en aplatissant le champ dans la direction de balayage.

5. Système de balayage selon la revendication 4, caractérisé en ce que les lentilles cylindrique-sphérique (34, 36) servent à focaliser la ligne dont l'image est formée, sur la facette de l'ensemble de miroir, et un point dans la direction de balayage croisé.

6. Système de balayage selon l'une quelconque des précédentes revendications, caractérisé en ce que ce système est monté de manière réglable sur un ensemble de socle rigide pour pourvoir se déplacer linéairement le long de rails de guidage fixes.

7. Système de balayage selon la revendication 6, caractérisé en ce que la diode laser à l'état solide (10) et les moyens de collimation (16, 18, 20, 22) sont montés à la cardan et placés sur un support rigide monté sur l'ensemble rigide et comprenant un élément de dissipation conducteur (44) permettant d'évacuer la chaleur de la diode laser.

8. Système de balayage selon la revendication 7, caractérisé en ce que les moyens de collimation (16, 18, 20, 22) sont montés en glissement par rapport à la diode laser (10), et en ce que des moyens de réglage à vernier sont utilisés pour faire basculer la diode laser et les moyens de collimation autour d'un axe fixe.

9. Système de balayage selon la revendication 8, caractérisé en ce que les moyens de collimation (16, 18, 20, 22) sont constitués par un objectif de microscope qui donne au rayon lumineux (14) la forme d'un faisceau (24) à section sensiblement elliptique.

FIG. 1

# FIG. 2

# FIG. 3

0 119 334

PHOTORECEPTOR DRUM

26

ABC

START OF SCAN DETECTOR

SCANNING BEAM

HEAT SINK

10 LASER DIODE

LIGHT COLLIMATING OBJECT LENS ( FOUR ELEMENTS )

30 CYLINDRICAL LENS #E1

28 POLYGON MIRROR

90

90

32 MOTOR

38 MIRROR

36 CYLINDRICAL SHERICAL LENS #E4

34 CYLINDRICAL SHERICAL LENS #E3

32 CYLINDRICAL MENISCUS LENS #2

(SIDE VIEW)

2

FIG. 4

0 119 334

# FIG. 5A

## FIG.5

| FIG.5A |
| FIG.5B |

TO DRUM 54

84

84

56

82

PIVOT 94

90

72

86

FIG. 5B

74

72

72

80

76

76

50

90

90

90

90

90

90

90

90

90

98

96

78

86

70